# EUROPEAN PATENT APPLICATION

(11) **EP 0 594 389 A1**
(43) Date of publication of application: **27.04.1994**
(21) Application number: 93308287.7
(22) Date of filing: 18.10.1993
(51) Int. Cl.: G11B 23/03, G11B 23/50

(54) **Micro floppy disc**

(30) Priority: 19.10.1992 GB 9221929
(71) Applicant: ENGINUITY LIMITED, Hong Kong (HK)
(72) Inventor: Garner, Steven William, 119A Repulse Bay Road (HK)
(74) Representative: Findlay, Alice Rosemary

(57) **Abstract**

A floppy disc (14) having a housing (13, a rotatable disc (15), the housing containing the disc within a disc rotation area, cleaning means for the disc, a lifting mechanism (17) to keep the cleaning means in contact with the disc, and support means (16) exterior of the disc rotation area to locate and hold the lifting mechanism.

## Description

This invention relates to micro floppy discs, and in particular to a lifting mechanism used in micro floppy discs.

The function of the lifting mechanism usually in the form of a spring is to press a wiping material against the rotating magnetic disc to keep it clean. The force of this spring directly effects the torque required to turn the disc, and thus is quite critical to both the effectiveness of the wipe cleaning function and the consistency of rotational speed of the disc.

A prior design of lifting mechanism was a mylar or styrene-acrylonitrile plastic material which uses an acrylic pressure sensitive adhesive orotheradhesive to attach the lifting mechanism to the acrylonitrile, bu- tacliene, styrene or polystyrene shell of the disc. Problems with this prior art mechanism are that it does not always provide very consistent wiping forces, attachment, or precision placement.

Another prior design was a metallic lifting arrangement which had two or more holes that fiffed over plastic pins which are moulded in the shell of the disc. The lifting arrangement was held in position over these pins, and the pins were then headed with a special ultrasonic welder. Such an arrangement provides advantages over the earlier mentioned prior art mechanism, in that it provides more consistent torque, attachment and precise location of the lifting arrangement.

The problem with both above mentioned prior art designs is that the mould for the disc had to be designed to use either the pins or the adhesive type lifting mechanism, but not both, and the parts are relatively expensive.

It is the object of the present invention to overcome one or more of the above mentioned problems.

In accordance with the invention, a floppy disc has a housing, a rotatable disc, the housing containing the disc within a disc rotation area, cleaning means for the disc, a lifting mechanism to keep the cleaning means in contact with the disc, and support means exterior of the disc rotation area to locate and hold the lifting mechanism.

Such an arrangement has the advantage that a disc in accordance with invention can be achieved by slightly modifying existing moulds in non-critical areas, and eliminates use of the need for adhesive or ultrasonic deformed (headed) pins, saving on material used and/or the equipment required to apply the part (ultrasonic welders).

Suitably the lifting mechanism is a low pressure spring and is made from any material which possesses the properties suitable to make a low pressure spring. For example, the pressure spring may be made from mylar, styrene-acrylonitrile or indeed metal such as stainless steel or phosphor bronze.

Suitably the lifting mechanism may be of many different shapes. It can also be placed in different locations around the outer circumference of the disc. Suitably the lifting mechanism could also comprise a plurality of springs in the floppy disc which are mounted in the top and bottom shells of the floppy disc.

The invention provides firstly a low cost lifting mechanism, secondly the ability for the customer to use at will either the lifting mechanism in accordance with the invention or a standard adhesive lifting mechanism, and thirdly easy and consistent placement of the lifting mechanism due to precision placement of the support means.

The invention will now be described by way of example with reference to the accompanying drawings in which:
Figure 1 shows the interior construction of a first embodiment of a floppy disc in accordance with the invention;
Figure 2 shows the interior construction of a second embodiment of a floppy disc in accordance with the invention; and
Figure 3 shows the interior construction a third embodiment of a floppy disc in accordance with the invention.

In the drawings, three embodiments of floppy discs in accordance with the invention are shown, each having a housing 13 for a rotatable disc (not shown), the housing containing a disc within a disc rotation area 15, cleaning means (also not shown) in the form of a disc shaped cloth material positioned and attached within the disc rotation area 15, the cleaning means being kept in contact with the disc by a lifting mechanism 17.

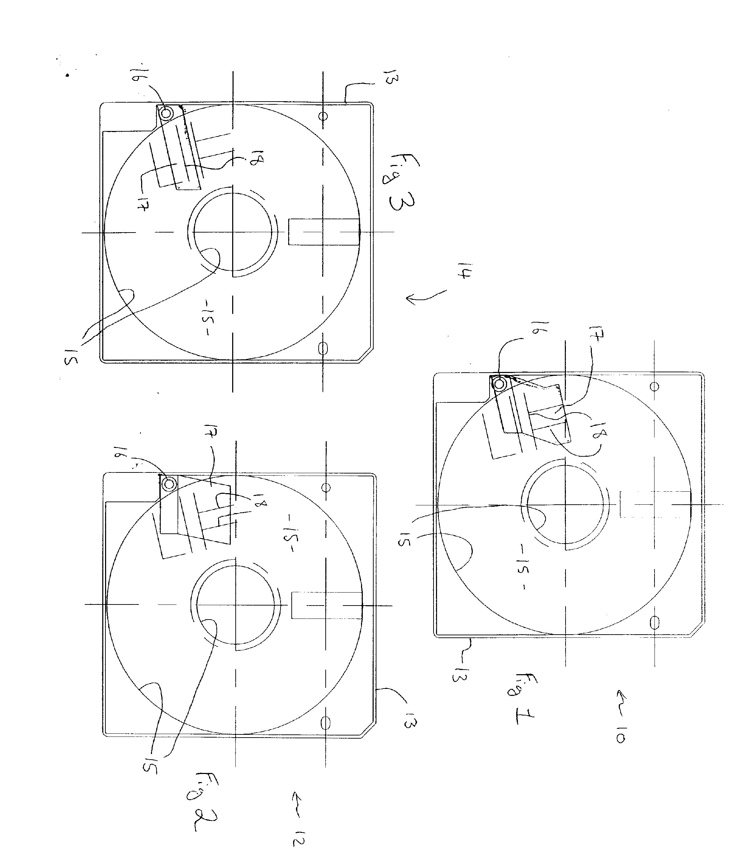

Figure 1 shows a floppy disc 10 having a lifting mechanism 17 which is large and of conventional shape, Figure 2 shows a floppy disc 12 with a lifting mechanism 17 of medium size and conventional shape, and Figure 3 shows a floppy disc 14 with a lifting mechanism which is small and not of any conventional shape.

The floppy discs 12, 14 and 16 all have the feature that support means in the form of one pin 16 is provided within the housing 13 but on the exterior of the disc rotation area 15 to locate and hold the lifting mechanism 17. The design eliminates the need for adhesive or ultrasonic deformed (headed) pins, and both saves on material used or the equipment to apply the part (ultrasonic welders).

The floppy discs 12, 14 and 16 are all provided with ribs 18 on the inside shell of the discs, the ribs 18 being generally positioned underneath the lifting mechanism 17 in order to provide some support for the lifting mechanism 17 if and when the spring force relaxes too much.

The lifting mechanisms 17 of Figures 1 to 3 are low pressure springs, and can be of any material which possesses the properties suitable to make a low pressure spring. For instance, the spring can be made from mylar, styrene-acrylonitrile or other plastics, or alternatively the spring may be metallic and made from for instance stainless steel or phosphor bronze.

The lifting mechanisms 17 can be positioned at any different location around the circumference of the disc (ie exterior of the disc rotation area 15) in accordance with the present invention.

Suitably (not shown) two or more lifting mechanisms are provided in each floppy disc, one being provided for instance in the top shell of the disc, and the other being provided in the bottom shell of the disc.

The arrangements shown in Figures 1 to 3 are of low cost, and the customer can use at will either lifting mechanisms 17 in accordance with the invention or standard adhesive lifting mechanisms, and such provides easy and consistent placement of the lifting mechanisms 17 due to the precision placement of the support means 16.

## Claims

1. A floppy disc having a housing, a rotatable disc, the housing containing the disc within a disc rotation area, cleaning means for the disc, a lifting mechanism to keep the cleaning means in contact with the disc, and support means exterior of the disc rotation area to locate and hold the lifting mechanism.

2. A floppy disc as claimed in claim 1 wherein the lifting mechanism is a low pressure spring.

3. A floppy disc as claimed in claim 2 wherein the pressure spring is made from mylar.

4. A floppy disc as claimed in claim 2 wherein the pressure spring is made of styrene-acrylonitrile.

5. A floppy disc as claimed in claim 2 wherein the pressure spring is made of stainless steel.

6. A floppy disc as claimed in claim 2 wherein the pressure spring is made of phosphor bronze.

7. A floppy disc as claimed in any preceding claim wherein the lifting mechanism is placed in a location adjacent to the outer edge of the disc.

8. A floppy disc as claimed in any preceding claim wherein the disc has a top and bottom shell.

9. A floppy disc as claimed in any preceding claim wherein the lifting mechanism comprises a plurality of springs.

10. A floppy disc as claimed in claim 9 as dependant on claim 8 wherein the pluarlity of springs are mounted in the top and bottom shells of the floppy disc.
